# EUROPÄISCHE PATENTSCHRIFT

(11) **EP 1 985 540 B1**
(45) Veröffentlichungstag und Bekanntmachung des Hinweises auf die Patenterteilung: **05.06.2013**
(21) Anmeldenummer: 08005082.6
(22) Anmeldetag: 19.03.2008
(51) Int. Cl.: B65B 1/32, B65B 19/34, B65B 39/00, G01G 19/393

(54) **Vorrichtung zum Kombinieren einer Anzahl von Salzstangen und zur synchronisierten Übergabe der Portionen an eine Verpackungsvorrichtung**
Device and method for combining a number of portions of pretzel sticks and for synchronised transfer of the portions to a packaging device
Procédé et dispositif de combinaison d'un nombre de portions de bâtonnets salés et de transmission synchronisée des portions à un dispositif d'emballage

(30) Priorität: 24.04.2007 DE 102007019246
(43) Veröffentlichungstag der Anmeldung: 29.10.2008
(73) Patentinhaber: Hastamat Verpackungstechnik GmbH, 35633 Lahnau (DE)
(72) Erfinder: Hollmann, Andreas, 76706 Dettenheim (DE); Rau, Manfred, 35578 Wetzlar (DE)
(74) Vertreter: Walther, Walther & Hinz GbR

(56) Entgegenhaltungen:
- EP-A- 0 127 183
- EP-A- 0 393 998
- EP-A- 0 640 814
- DE-A1- 3 226 215
- DE-A1- 3 537 426
- DE-A1- 4 404 897
- DE-C1- 19 807 775

## Beschreibung

Die vorliegend Erfindung betrifft eine Vorrichtung gemäß dem Oberbegriff des Anspruches 1.

Aus der DE 198 07 775 A1 ist eine Vorrichtung zum Kombinieren einer Anzahl von Portionen eines stangenförmigen Produktes bekannt, welche an eine Teilmengen-Kombinationswaage angeschlossen ist. Dabei werden einer Dosierschale der Teilmengen-Kombinationswaage eine gewisse Anzahl der stangenförmigen Produkte (hier Salzstangen) zugeführt und sobald sich In den Dosierschalen ausreichende Portionen gebildet haben, werden diese an je einen Wiegebehälter weitergegeben und dort exakt gewogen. Eine solche Teilmengen-Kombinationswaage kann bis zu 32 einzelne Dosierschalen und Wiegebehälter aufweisen, wobei vorzugsweise jedoch nur 16 Dosierschalen und 16 Wiegebehälter vorgesehen sind. Nach dem Wiegen der einzelnen Portionen in den Wiegebehältern werden diejenigen Wiegebehälter ausgesucht, deren Portionen in der Summe möglichst nah an das Sollgewicht des zu verpackenden Produktes heranreichen. Sodann werden die ausgewählten Wiegebehälter geöffnet und die stangenförmigen Produkte fallen auf darunter angeordnete Rutschen und werden von dort in ein geeignetes Verpackungsbehältnis, z. B. eine Tüte oder eine Schachtel, geführt. Während die stangenförmigen Produkte in die Verpackung gleiten, werden die entleerten Wiegebehälter neu befüllt, so dass sich der Vorgang wiederholen kann. Die Kapazität der Anlage ist naturgemäß begrenzt, da die stangenförmigen Produkte, insbesondere die Salzstangen eine gewisse Zeit benötigen, um auf der Produktrutsche In das Behältnis zu rutschen, wobei die Länge eines Zyklus von den langsamsten Produkten bestimmt wird.

Aus der EP 0127 183 A2 und der DE 44 04 897 A1 sind Wägevorrichtungen bekannt, mit denen Schüttgut gewogen und einer Verpackungseinheit zugeführt werden kann. Dabei wird das Schüttgut zunächst in einzelnen Wägebehältern gewogen, dann über eine Produktführung einem Produktbehälter zugeführt. Anschließend wird aus dem in den Produktbehältern vorhandenen Stückgut eine bestimmte Kombination zusammengestellt, die dem Sollgewicht möglichst nahe kommt. Diese ausgewählten Produktbehälter werden anschließend geöffnet, so dass das Schüttgut dann in die entsprechende Verpackung gelangt. Beide Vorrichtungen sind allerdings nicht für stangenförmige Produkte wie Salzstangen geeignet, da die entsprechenden Wiegebehälter, Produktführungen und Produktbehälter die stangenförmigen Produkte schädigen oder zerstören würde.

Davon ausgehend liegt der vorliegenden Erfindung die Aufgabe zu Grunde, die Kapazität der eingangs genannten Vorrichtung zu erhöhen. Dabei liegt der vorliegende Erfindung die Erkenntnis zugrunde, dass bei einer Verkürzung des Fallweges auch die Dauer eines einzelnen Zyklus verkürzt werden kann, so dass in einer vorgegebenen Zeit mehr zyklen abgewickelt werden können, was die Kapazität der Anlage erhöht.

Als technische Lösung dieser Aufgabe wird erfindungsgemäß eine Vorrichtung mit den Merkmalen des Anspruches 1 vorgeschlagen. Vorteilhafte Weiterbildungen dieser Vorrichtung sind den jeweiligen Unteransprüchen zu entnehmen.

Eine nach dieser technischen Lehre ausgebildete Vorrichtung hat den Vorteil, dass die unterhalb der Teilmangen-Kombinationswaage angeordneten Übergabekammern zu kürzeren Fallwegen des Produktes führen und die kürzeren Fallwege wiederum ermöglichen einen schnelleren Zyklus, was zu einer Erhöhung der Kapazität der gesamten Anlage führt.

Ein weiterer Vorteil besteht darin, dass die Auswahl der Portionen nun nicht länger im Wiegebehälter, sondern in den Übergabekammern erfolgt. Somit kann der Wiegebehälter bereits wieder neu befüllt werden, während in der Übergabekammer noch das Zusammenstellen der Portionen und das Abgeben der einzelnen Produkte an die Verpackungseinheit durchgeführt wird. Durch dieses parallele Arbeiten wird der jeweilige Zyklus weiter verkürzt, was zu einer weiteren Erhöhung der Kapazität der Anlage führt.

Noch ein weiterer Vorteil besteht darin, dass beispielsweise bei zwei Übergabekammern je Wiegebehälter die Anzahl der möglichen Kombinationen verdoppelt wird. Analoges gilt bei drei Übergabekammern je Wiegebehälter usw.. Diese erhöhte Anzahl der Kombinationsmöglichkeiten führt zu einem präziseren Erreichen des Zielgewichtes, so dass der Verpacker dieser stangenförmigen, stückigen oder schüttfähigen Produkte präziser planen und kalkulieren kann.

In einer bevorzugten Ausführungsform erfolgt die Übergabe der gewogenen Portionen an jede ausgewählte Übergabekammer, das Öffnen des Verschlusses der Übergabekammern und somit die Übergabe der Portionen an eine Verpackungseinheit gleichzeitig, so dass die einzelnen Produkte vom Wiegebehälter an die Übergabekammer und von der Übergabekammer an die Verpackungseinheit parallel und somit zeitgleich ablaufen, was zu einer weiteren Verkürzung des Zyklus führt und eine weitere Erhöhung der Kapazität der Anlage bedeutet.

In einer weiteren, bevorzugten Ausführungsform ist die Produktrutsche als Produktweiche ausgebildet, wobei es sich als vorteilhaft erwiesen hat, die Produktrutsche schwenkbar zu lagern, so dass das Ende der Produktrutsche derart verschwenkt werden kann, dass dieses zu der nachgeschalteten Übergabekammer führt, in die das Produkt gelangen kann. Hierdurch ist eine konstruktiv günstige und dennoch funktionstüchtige Produktweiche geschaffen.

Weitere Vorteile der erfindungsgemäßen Vorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Darstellung einer erfindungsgemäßen Vorrichtung in Seitenansicht, an die eine Teilmengen-Kombinationswaage angebunden ist.
- Fig. 2: eine geschnitten dargestellte Draufsicht auf die Vorrichtung gemäß Fig. 1, geschnitten entlang Linie II - II in Fig. 1;
- Fig. 3: eine Detailvergrößerung einer Produktweiche und zweier nachgeschalteter Übergabekammer der Vorrichtung gemäß Fig. 1.

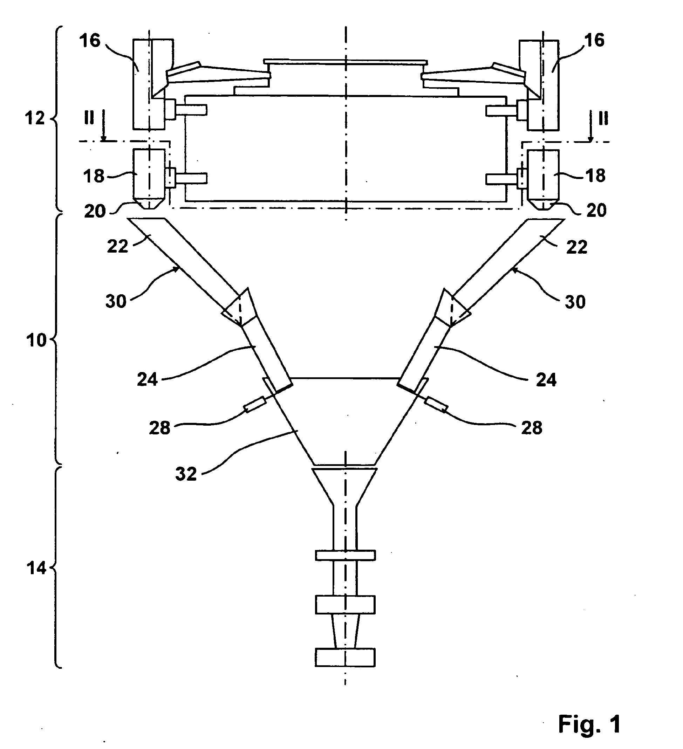

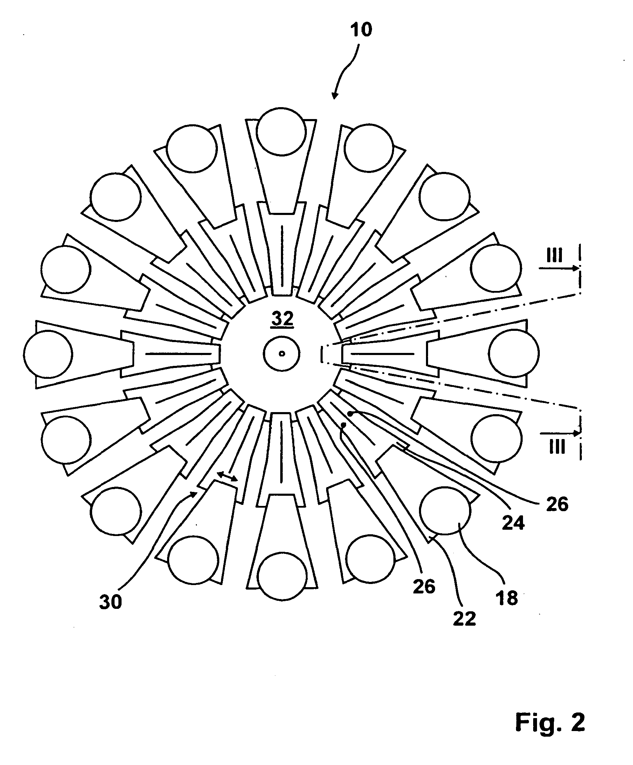

In den Figuren 1 bis 3 ist eine erfindungsgemäße Vorrichtung zum Kombinieren einer Anzahl von Portionen eines stangenförmigen Produktes und zur synchronisierten Übergabe der Portionen 10 dargestellt, die an eine Teilmengen-Kombinationswaage 12 angeschlossen ist. An diese Vorrichtung 10 schließt sich eine Verpackungseinheit 14 an, in der das stangenförmigen Produkt verpackt wird. Bei der hier abgebildeten Vorrichtung handelt es sich um eine Anlage zum Verpacken von Salzstangen.

Mittels einer hier nicht näher dargestellten Vorrichtung werden die stangenförmigen Produkte in eine Anzahl von Dosierschalen 16 derart überführt, dass in jeder Dosierschale 16 eine Portion der stangenförmige Produkte gelangt. Über den Umfang der Teilmengen-Kombinationswaage 12 sind insgesamt 16 Dosierschalen äquidistant angeordnet. Jeder Dosierschale 16 ist ein Wiegebehälter 18 zugeordnet, in der die Portion exakt gewogen wird. Ausgangsseitig ist jeder Wiegebehälter 18 durch einen Verschluss 20 verschlossen, wobei jeder Wiegebehälter 18 individuell geöffnet oder geschlossen werden kann.

Die Vorrichtung zum Kombinieren und Übergeben der Portionen umfasst sechzehn Produktrutschen 22, so dass jedem Wiegebehälter 18 eine eigene Produktrutsche 22 zugeordnet ist. Diese Produktrutsche 22 reicht bis an einen Produktbehälter 24 heran, der in seinem oberen Bereich trichterförmig ausgeweitet ist, so dass die Produktrutsche 22 bis in den trichterförmigen Bereich des Produktbehälters hineinreicht. Im Inneren weist der Produktbehälter zwei Übergabekammern 26 auf, wobei jede Übergabekammer 26 durch ein eigenes Verschlusssystem 28 individuell geöffnet und geschlossen werden kann. Dieses Verschlusssystem 28 umfasst einen quer zur Öffnung der Übergabekammer 26 und unter dieser angeordneten Schieber. Zum Öffnen der Übergabekammer 26 wird der Schieber schnell zurückgezogen, um die Öffnung vollständig frei zu geben.

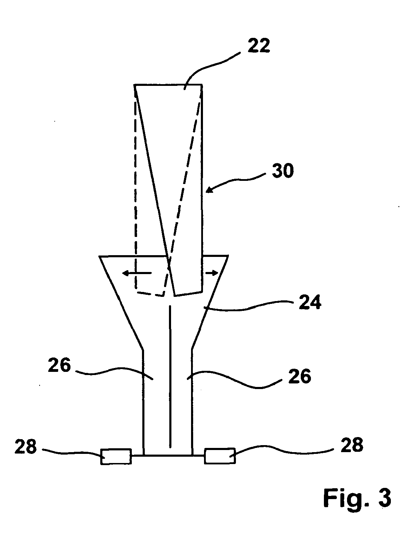

Wie insbesondere Figur 3 zu entnehmen ist, ist die Produktrutsche 22 in ihrem oberen Bereich schwenkbar gelagert, so dass die Produktrutsche 22 gleichzeitig als Produktweiche 30 fungiert. Je nach Anforderung kann die Produktrutsche 22 das in ihr herunterrutschende Produkt in die rechte oder die linke Übergabekammer 26 leiten. Dies geschieht dadurch, dass die Produktrutsche 22 in die jeweils gewünschte Position geschwenkt wird.

Unterhalb der Produktbehälter 24, respektive der Übergabekammern 26, ist ein Sammeltrichter 32 vorgesehen, der die nach unten rutschenden Produkte in die Verpackungseinheit 14 leitet, wo diese Produkte dann versandfertig verpackt werden.

Bei der hier dargestellten Anlage besitzt die Teilmengen-Kombinationswaage 12 sechszehn Dosierschalen 16 und sechszehn Wiegebehälter 18, so dass die Vorrichtung 10 ebenfalls sechzehn Produktrutschen 22 und sechszehn Produktbehälter 24 aufweist. Erfindungsgemäß stehen jedoch insgesamt 32 Übergabekammern 26 zur Verfügung. Durch diese erhöhte Anzahl an Übergabekammern ist es möglich, aus einer größeren Anzahl von Portionen auszuwählen, so dass das Zielgewicht sehr viel präziser erreicht werden kann.

Die Verlagerung der Auswahl der Kombinationen von den Wiegebehältern 18 hin zu den Übergabekammern 26 hat weiterhin den Vorteil, dass nunmehr während des Auswählens der einzelnen Portionen bereits die Wiegebehälter 18 neu befüllt werden können, und dass die Portionen gleich gewogen werden. Durch dieses parallele Arbeiten wird der Zyklus zum Verpacken einer Menge von Produkten deutlich reduziert, was die Kapazität der gesamten Anlage erhöht.

Nachfolgend wird der Ablauf beim Verpacken der Produkte detailliert beschrieben.

Zunächst werden die stangenförmigen Produkte, hier die Salzstangen, über die Dosierschalen portioniert und in den Wiegebehältern 28 gewogen. Dabei verweilen die Produkte beziehungsweise die Portionen so lange im Wiegebehälter 18, bis deren Verschluss 20 geöffnet wird. Nach dem Öffnen des Verschlusses 20 rutschen die stangenförmigen Produkte des jeweiligen Wiegebehälters 18 über die dazugehörige Produktrutsche 22 in eine Übergabekammer 26 im Produktbehälter 24. Diese Übergabekammer 26 ist durch einen individuellen Verschluss 28 verschlossen, so dass die stangenförmigen Produkte hier zur Ruhe kommen.

In den Wiegebehältern 18 wird das Gewicht der Portion elektronisch erfasst und dieses Gewicht wird dann der jeweiligen Übergabekammer 26 zugeordnet, so dass das Gewicht der in der jeweiligen Übergabekammer 26 befindlichen Portion jederzeit bekannt ist.

Nun werden aus den 32 Übergabekammern 26 eine Anzahl von Portionen ausgewählt, deren Gewicht in der Summe möglichst nah an das Zielgewicht herankommt. Sobald diese ausgewählten Portionen ermittelt sind, öffnen die Verschlusssysteme 28 der jeweils ausgewählten Übergabekammern 26, so dass die darin befindlichen Portionen über den Sammeltrichter 32 in die Verpackungseinheit 14 gelangen und dort verpackt werden können. Dabei öffnen die Verschlusssysteme 28 der ausgewählten Übergabekammern 26 gleichzeitig, damit ein Stapeln der stangenförmigen Produkte, hier der Salzstangen, während des Rutschens über den Sammeltrichter 32 in die Verpackung vermieden wird.

In einer anderen, hier nicht dargestellten Ausführungsform öffnen die Verschlusssysteme 28 der ausgewählten Übergabekammern 26 kurz nacheinander, so dass die in den Übergabekammern befindlichen Produkte nacheinander über den Sammeltrichter 32 in die Verpackung rutschen können. Eine solche Vorgehensweise ist bei Produkten vorteilhaft, bei denen eine Staugefahr am Ende des Sammeltrichters 32 zu befürchten ist.

Annähernd zeitgleich mit dem Öffnen der Verschlusssysteme 28 der ausgewählten Übergabekammern 26 werden die als Produktweiche 30 fungierenden Produktrutschen 22 derart verschwenkt, dass die nächste Portion in die nunmehr leere Übergabekammer 26 gelangen kann. Ebenfalls annähernd zeitgleich öffnen diejenigen Verschlüsse 20 derjenigen Wiegebehälter 18, die zum Befüllen der ausgewählten und nunmehr leeren Übergabekammern 26 erforderlich sind, so dass neue Portionen vom stangenförmigen Produkt in die gerade entleerten Übergabekammern 26 nachrutschen können, noch während die ausgewählten Portionen in die Verpackungseinheit 12 rutschen.

Durch ein derartiges paralleles Arbeiten kann die Dauer eines Beladungszyklus deutlich verringert werden, so dass in einer bestimmten Zeit sehr viel mehr stangenförmige Produkte verpackt werden können als mit herkömmlichen Anlagen.

### Bezugszeichenliste:

- 10: Vorrichtung
- 12: Teilmengen-Kombinationswaage
- 14: Verpackungseinheit
- 16: Dosierschale
- 18: Wiegebehälter
- 20: Verschluss
- 22: Produktrutsche
- 24: Produktbehälter
- 26: Übergabekammer
- 28: Verschlusssystem
- 30: Produktweiche
- 32: Sammeltrichter

## Patentansprüche

1. Vorrichtung zum Kombinieren einer Anzahl von Portionen eines stangenförmigen Produktes nämlich Salzstangen und zur synchronisierten Übergabe der Portionen an eine Verpackungsvorrichtung, wobei der Vorrichtung eine Teilmengen-Kombinationswaage (12) vorschaltbar ist, mit einer Produktrutsche (22) für jeden Wiegebehälter (18) der Teilmengen-Kombinationswaage (12) zur Aufnahme und Weiterleitung der aus dem Wiegebehälter (18) kommenden Portion, und mit einem Sammeltrichter (32) zum Sammeln der Anzahl von Portionen und zur Übergabe an eine Verpackungsvorrichtung,
**dadurch gekennzeichnet,**
**dass** zwischen der Produktrutsche (22) und dem Sammeltrichter (32) ein Produktbehälter (24) mit mindestens zwei Übergabekammem (26) vorgesehen ist, in den die Produktrutsche (22) die aus dem Wiegebehälter (18) kommende Portion leitet, dass die Produktrutsche (22) als Produktweiche (30) ausgebildet ist, so dass die Produktrutsche (22) jeder der nachgeschalteten Übergabekammern (26) eine Portion zuordnen kann, dass der Produktbehälter (24) in seinem oberen Bereich trichterförmig ausgeweitet ist, und dass die Produktrutsche (22) bis in den trichterförmigen Bereich des Produktbehälters (24) hineinreicht.

2. Vorrichtung nach Anspruch 1,
**dadurch gekennzeichnet,**
**dass** jede Übergabekammer (26) ausgangsseitig ein eigenständiges Verschlusssystem (28) aufweist.

3. Vorrichtung nach Anspruch 2,
**dadurch gekennzeichnet,**
**dass** das Verschlusssystem (28) als ein Schieber ausgebildet ist, der vorzugsweise quer zur Fallrichtung der Portion angeordnet Ist.

4. Vorrichtung nach einem der vorangehenden Ansprüche,
**dadurch gekennzeichnet,**
**dass** die Produktrutsche (22) an oder nahe ihres oberen Randes schwenkbar gelagert ist.

5. Vorrichtung nach wenigstens einem der vorangehenden Ansprüche,
**dadurch gekennzeichnet,**
**dass** die Übergabekammer (26) eingangsseitig vergrößert ausgebildet ist.

## Claims

1. A device for combining a number of portions of a stick-shaped product, namely salt sticks and for synchronized transfer of the portions to a packaging device, portion combination scales (12) being connectable ahead of the device, with a product chute (22) for each weighing vessel (18) of the portion combination scales (12) for receiving and forwarding the portion coming from the weighing vessel (18) and with a collecting hopper (32) for collecting the number of portions and transfer to a packaging device,
**characterized in that**
a product container (24) with at least two transfer chambers (26) is provided between the product chute (22) and the collecting hopper (32), into which the product chute (22) conveys the portion coming from the weighing vessel (18), that the product chute (22) is configured as a product deflector (30), so that the product chute (22) can assign a portion to each of the downstream transfer chambers (26), that the product container (24) is enlarged in its upper area in the form of a funnel and that the product chute (22) extends into the funnel-shaped area of the product container (24).

2. The device according to claim 1,
**characterized in that**
each transfer chamber (26) has an independent closing system (28) on the exit side.

3. The device according to claim 2,
**characterized in that**
the closing system (28) is configured as a slider that is preferably disposed transversely to the falling direction of the portion.

4. The device according to one of the afore-mentioned claims,
**characterized in that**
the product chute (22) is pivotably mounted on or close to its upper edge.

5. The device according to at least one of the afore-mentioned claims,
**characterized in that**
the transfer chamber (26) is configured bigger on the side of the entrance.

## Revendications

1. Dispositif pour combiner un nombre de portions d'un produit en forme de bâtonnets, à savoir des bâtonnets salés et pour le transfert synchronisé des portions à un dispositif d'emballage, une balance de combinaison de portions (12) étant apte à être montée en amont du dispositif, avec une glissière à produits (22) pour chaque récipient de pesage (18) de la balance de combinaison de portions (12) pour recevoir et transmettre les portions venant du récipient de pesage (18) et avec une trémie de collecte (32) pour la collecte du nombre de portions et la transmission à un dispositif d'emballage,
**caractérisé en ce que**
un récipient de produit (24) avec au moins deux chambres de transfert (26) est prévu entre la glissière à produits (22) et la trémie de collecte (32), dans lequel la glissière à produits (22) mène la portion venant du récipient de pesage (18), que la glissière à produits (22) est configurée en un aiguillage de produits (30), de sorte que la glissière à produits (22) peut attribuer une portion à chacune des chambres de transfert (26), que le récipient de produit (24) est évasé en forme d'entonnoir dans sa partie supérieure et que la glissière à produit (22) s'étend jusque dans la partie en forme d'entonnoir du récipient de produit (24).

2. Dispositif selon la revendication 1,
**caractérisé en ce que**
chaque chambre de transfert (26) comprends un système de fermeture (28) à part entière du côté de sa sortie.

3. Dispositif selon la revendication 2,
**caractérisé en ce que**
le système de fermeture (28) est configuré comme une glissière disposée de préférence transversalement par rapport à la direction de chute de la portion.

4. Dispositif selon l'une quelconque des revendications précédentes,
**caractérisé en ce que**
la glissière à produits (22) est montée de manière pivotante sur ou près de son bord supérieur.

5. Dispositif selon au moins l'une des revendications précédentes,
**caractérisé en ce que**
la chambre de transfert (26) est configurée de manière agrandie du côté de son entrée.
